# EUROPEAN PATENT APPLICATION

(11) **EP 3 296 379 A1**
(43) Date of publication of application: **21.03.2018**
(21) Application number: 17460053.6
(22) Date of filing: 30.08.2017
(51) Int. Cl.: C10B 47/34, C10B 53/07, B01J 8/10, B01J 8/12

(54) **DEVICE FOR PYROLYSIS OF PLASTIC WASTES**

(30) Priority: 30.08.2016 PL 41850616
(71) Applicant: Metal Expert Sp. z o. o. sp. j., 00-195 Warszawa (PL)
(72) Inventor: Klein, Marek, 80-301 Gdansk (PL); Heda, Lukasz, 80-180 Gdansk (PL); Kaminski, Dariusz, 03-028 Warszawa (PL)
(74) Representative: Jedrzejewski, Michal

(57) **Abstract**

The application relates to a pyrolysis device, characterised in that the reaction chamber is an enclosure (3) in the form of a pipe with a circular cross section. Inside there is a fixed screw conveyor (11) with cells (8). The enclosure (3) is equipped with a vane feeder (10) mounted coaxially with the enclosure (3). On the feeder shaft at least three positioning vanes (12) and one working vane (9) for each cell (8) are mounted via sleeves (17). The cells (8) extend up to 4/5 of the length of the vane feeder (10) shaft on biochar outlet side (7), and are located in the bottom half of the fixed screw conveyor (11), on its inside. The tops of all the cells (8) are open. The working volume of the cells (8) decreases towards the biochar outlet (7). The cells (8) are connected with each other by their edges (16) slanting towards the biochar outlet (7). A first screw feeder is located on the remaining section of the shaft (13). The reaction chamber is positioned with an angle of 20 to 45 degrees relative to the floor, wherein the part of the device downstream the vane feeder (10) is closer to the floor.

## Description

The subject of the invention is a pyrolysis device. The device according to the invention can be used in particular for the pyrolysis of solid waste material, including plastics, sewage sludge, and biomass.

As it is impossible to break most plastic waste into its individual constituent materials, it is necessary to use such waste for energy generation.

Pyrolysis is a process that requires substantial energy input. Therefore, pyrolysis reactors known in the prior art are indirectly heated by flue gases via an external heating mantle, and, in rare cases, electrically heated.

Polish patent description No. 194973 discloses a device for the pyrolysis of waste plastics with a reaction chamber with at least one heating element i.e. a heating tube with a curved shape ad with a length-to-diameter ratio of at least 10, preferably 50-250, characterised in that that at the inlet of the heating pipe a burner is installed on the inside of the pipe, wherein the heat pipe is preferably supported by at least one support. The reactor is equipped with a heat pipe only, whereas the solution according to the invention is equipped with indirect heated rotary cell feeder.

Patent document US 2012/0043194 A1 discloses a method for pyrolysis of solid waste through heating the charge material up to 300-850°C by means of transferring heat to the material via a resistive heating coil, which doubles as a feed conveyor.

Patent document PL 191275 discloses a method for the production of low-molecular-weight olefins by the pyrolysis of hydrocarbons in which the fed initial raw material is heated and evaporated, then the initial material is mixed with a steam diluent, and the resulting mixture is heated to the temperature of pyrolysis in a vane rotary reactor, then the cracked gas is cooled down, wherein the gas decomposes, and the mixture is heated to the temperature of pyrolysis by mixing it with the hot pyrolysis gas circulating in the working chamber of the vane rotary reactor for a negligibly small duration compared to the duration of the pyrolysis process. The invention is applicable in the petrochemical industry, in particular to the manufacture of low-molecular-weight olefins via thermal cracking (pyrolysis) of hydrocarbons that constitute petroleum products.

The prior art knowns a reactor for continuous pyrolysis - a "Pyrogen" described in patent document US 2010/0275823, which uses an auger-type reactor with burner heating. The obtained syngas is used as fuel for the generation of electricity and heat.

The reactors known in the prior art are designed to maximise the heating surface to minimise the duration of heating the mixture of plastics to a high temperature. The decomposition of hydrocarbon is an endothermic process. Temperatures above 500°C fosters the formation of coke. This phenomenon intensifies with the increase of temperature and duration of residence. The device according to the invention prevents this phenomenon from occurring.

The nature of the invention comprises a pyrolysis device consisting of a reaction chamber and an assembly for heating the reaction chamber connected to the chamber with a tight joint, a dispenser of plastic waste, a biochar collector, an outlet for discharging pyrolysis products, and an outlet for discharging biochar characterised in that the reaction chamber is an enclosure in the form of a pipe with a circular cross section. Inside there is a fixed screw conveyor with cells. The enclosure is equipped with a vane feeder mounted coaxially with the enclosure. On the feeder shaft at least three positioning vanes and one working vane for each cell are mounted via sleeves. The cells extend up to 4/5 of the length of the vane feeder shaft on biochar inlet side, and are located in the bottom half of the fixed screw conveyor, on its inside. The tops of all the cells are open. The working volume of the cells decreases towards the biochar outlet. The cells are connected with each other by their edges slanting towards the biochar outlet. The first screw feeder is located on the remaining section of the shaft. The reaction chamber is positioned an angle of 20 to 45 degrees relative to the floor, wherein the part of the device downstream the vane feeder is closer to the floor.

Preferably the sleeves are in a position where the positioning vanes on the respective sleeves are positioned at the same angles.

The sleeves may also be in a position where the positioning vanes on the respective sleeves are positioned at different angles.

The positioning vanes on each sleeve can be attached by equal angles relative to each other.

Preferably at the end of the enclosure closer to the floor there is a compensator.

Preferably the compensator is made as two truncated cones arranged base to base.

The enclosure may be equipped with external thermal insulation and internal thermal insulation.

The device may be equipped with at least one heat sink consisting of an aluminium disc.

The cell rotary design of the reaction chamber is marked by significant heat transfer surface area along the membrane between the flue gases and the charge material, therefore the duration of residence of the charge in the reactor is short. The solution helps to increase the duration of residence of the hot flue gases in the device, thus increasing the efficiency of the recovery of heat from the flue gases by forcing their turbulent flow. Unlike a spiral design used in the prior art, in which heat is transferred through a tube or a spiral, a cell design provides much greater heat transfer area and thus increases the rate of pyrolysis. The charge material is heated both from the bottom and from the sides.

The main advantage of the subject of the invention is the elimination of coke deposition. The device according to the invention also makes it possible to increase the heating surface to minimise the duration of heating the mixture of plastics to a high temperature.

The invention is shown as an embodiment in schematic figures, in which Fig. 1 shows the axonometric view of the entire device, Fig. 2 - the device side view of FIG. 3 - the top view of the device, Fig. 4 - the longitudinal cross-section of the reactor, Fig. 5 - the longitudinal cross-section of the cells, Fig. 6 - the cross-section of the device.

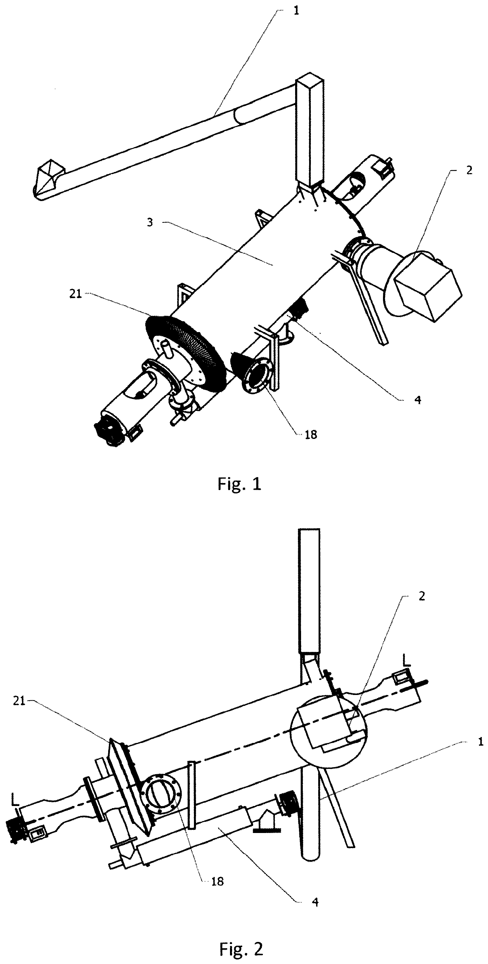

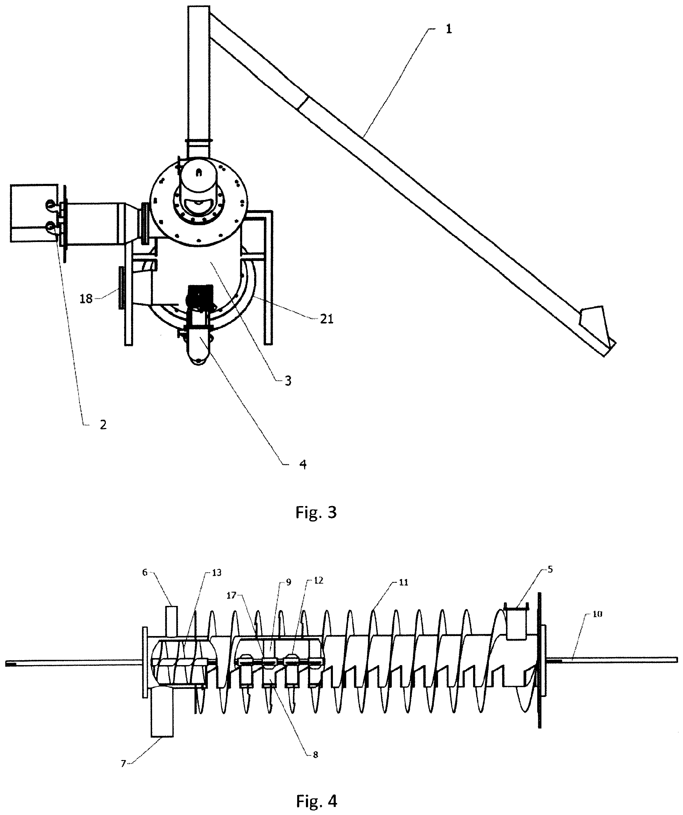

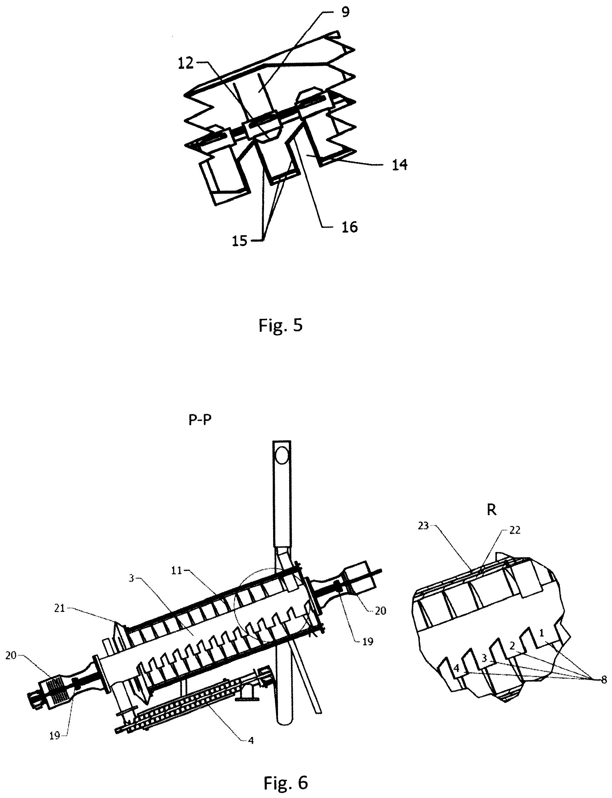

The invention in the embodiment according to Fig. 1-6 relates to the process of pyrolysis. In the solution according to the invention fuel (waste, biomass) is fed by screw conveyor 1 directly to the reactor. Waste is fragmented before feeding it to the reactor. Fuel is fed to the cell 8 - the first of the thirteen cells, and with largest volume - via fuel inlet 5, from which the fuel is transferred via the vane feeder 10 vanes to the second and further cells 8, with progressively lower volume. The cells are spaced along 1.7 m of the shaft length.

The device is equipped with a seal 10 comprising a cord 19 located away from its working section 18. Additionally, to lower the operating temperature of the seal 10, the device is equipped with heat sinks 21 consisting of aluminium disks exposed to air flow from additional fans.

The cell 8 consists of a flue gas duct 15 and a reaction space 14. Flue gas stream flows along the sides of the reaction space 14 through ducts 15, and along the bottom. The charge material is directed into the first cell 8, where it undergoes partial pyrolysis within several seconds to several minutes. Then, a working vane 9 of the feeder 10 scrapes the charge material out of the cell 8. The reaction chamber is positioned at an angle of 20° so that partially pyrolysed charge material pours from the vane 9 through the edge 16 of the cell 8 to the next cell 8. As charge material reaction progress increases and its volume decreases proportionally to the duration of residence in the reactor, cells 8 have progressively decreasing volumes. Working vanes 9 and positioning vanes 12 are located on sleeves 17, are slightly movable, and are arranged by an angle of 180° relative to each following vane 12.

The working volume of cells 8 progressively decreases towards the biochar outlet 7. Then the biochar is fed by first screw feeder 13 through the biochar outlet 7 to the second screw feeder 4 located outside the reaction chamber, and is thus discharged from the reactor. The gas generated in the process flows out of the pyrolysis gas outlet 6. The vane feeder 10 is enclosed in the enclosure 3 with a length of 2.1 m and is equipped with working vanes 9 and positioning vanes 12, which prevent the working vanes 9 from extending outside cells 8 when the device is heated. To increase the efficiency of the transfer of heat between the flue gases and the reactor a fixed screw feeder 11 is used, whose blades pass through cells 8, so that the exhaust gases flow around each cell 8.

Every cell 8 in the vane feeder 10 is equipped with a working vane 9. During the process, the working vanes 9 prevent the deposition of coke on the inner surfaces of cells 8.

A compensator 20 consisting of two truncated cones joined base to base is used to compensate for the thermal expansion. Additionally, the enclosure 3 is equipped with external thermal insulation 23 and internal thermal insulation 22.

The distribution of the temperature within the reactor in between 500-1200°C. The reaction chamber is heated indirectly by the exhaust gases from a burner, whose fuel consists of LPG (at the start-up phase) and up to 70% by weight of the pyrolysis gas (for the following composition of the burner mixture: 30% LPG + 70% GP). The gas obtained in the process has low tar and dust content.

The generated gas is from 60 to 75% by weight of the initial charge material and can be used as gas fuel for an internal combustion power and heat generation unit. A by-product of the pyrolysis consists of biochar with calorific value approximately 15 MJ/kg, in the amount of 5-30% depending on the raw material.

The indirect heat exchanger is fed with flue gases from the high-temperature burner 2 fed with LPG at the start-up phase, and with hot gas from the pyrolysis process, wherein the flue gas outlet is located at the opposite end of the working section 18 of the device. The use of a burner of this type enables direct gas burning, without a purification process.

The device is designed to operate both in cocurrent and countercurrent arrangements.

The device according to the embodiment was operated for 48 hours in a cocurrent arrangement, wherein no coke deposited on the heating units, and the time required to reach a temperature of 1000°C amounted to approximately 1 hour. Using the device according to the invention made it possible to considerably reduce the time required to reach high temperatures-previously the time required to reach 850°C amounted to as much as 6 to 7 hours.

## Claims

1. A pyrolysis device consisting of a reaction chamber and an assembly for heating the reaction chamber connected to the chamber with a tight joint, a dispenser of plastic waste, a biochar collector, an outlet for discharging pyrolysis products, and an outlet for discharging biochar **characterised in that** the reaction chamber is an enclosure (3) in the form of a pipe with a circular cross section, inside which there is fixed screw conveyor (11) with cells (8), whereas the enclosure (3) is equipped with a vane feeder (10) mounted coaxially with the enclosure, and the feeder of the shaft at least three positioning vanes (12) and one working vane (9) for each cell (8) are mounted via sleeves (17), wherein the cells (8) extend up to 4/5 of the length of the vane feeder shaft (10) on biochar inlet side (7), and are located in the bottom half of the fixed screw conveyor (11), on its inside, and the tops of all the cells (8)are open, wherein the working volume of the cells (8) decreases towards the biochar outlet (7) and the cells (8) are connected with each other by their edges (16) slanting towards the biochar outlet (7), wherein the first screw feeder (13) is located on the remaining section of the shaft, and the reaction chamber is positioned an angle of 20 to 45 degrees relative to the floor, wherein the part of the device downstream the vane feeder (10) is closer to the floor.

2. The device according to claim 1, **characterised in that** the sleeves (17) are in a position where the positioning vanes (12) on the respective sleeves (17) are positioned at the same angles.

3. The device according to claim 1, **characterised in that** the sleeves (17) are in a position where the positioning vanes (12) on the respective sleeves (17) are positioned at different angles.

4. The device according to claim 1, **characterised in that** the positioning vanes (12) on each sleeve (17) are arranged by equal relative to each other.

5. The device according to claim 1, **characterised in that** at the end of the enclosure (3) closer to the floor there is a compensator (20).

6. The device according to claim 1, **characterised in that** the compensator (20) is made as two truncated cones arranged base to base.

7. The device according to claim 1, **characterised in that** the enclosure (3) is equipped with external thermal insulation (23) and internal thermal insulation (22).

8. The device according to claim 1, **characterised in that** it is equipped with at least one heat sink consisting of an aluminium disc.
